(19) Europäisches Patentamt
European Patent Office
Office européen des brevets

(11) Publication number: **0 383 015 A2**

# (12) EUROPEAN PATENT APPLICATION

(21) Application number: **90100550.4**

(22) Date of filing: **12.01.90**

(51) Int. Cl.$^5$: **C09J 175/16, B32B 7/12, B32B 31/28**

(30) Priority: **13.01.89 JP 6900/89**

(43) Date of publication of application: **22.08.90 Bulletin 90/34**

(84) Designated Contracting States: **DE FR GB**

(71) Applicant: **TAKEDA CHEMICAL INDUSTRIES, LTD.**
**3-6, Doshomachi 2-chome Chuo-ku**
**Osaka(JP)**

(72) Inventor: **Kubota, Tsutomu**
**6-9, Wakayamadai 1-chome, Shimamoto-cho**
**Mishima-gun, Osaka 618(JP)**
Inventor: **Kotani, Reiichi**
**D75 102, 18 Tsukumodai 5-chome**
**Suita, Osaka 565(JP)**
Inventor: **Goto, Jugo**
**17-10, Daiwanishi 3-chome**
**Kawanishi, Hyogo 666-01(JP)**

(74) Representative: **von Kreisler, Alek, Dipl.-Chem. et al**
**Patentanwälte Von Kreisler-Selting-Werner**
**Deichmannhaus am Hauptbahnhof**
**D-5000 Köln 1(DE)**

## (54) Production of laminated film.

(57) A process of producing laminated films which have stable and strong adhesive strength and heat resistance immediately after the lamination has been carried out, which comprises:
coating a photocurable adhesive on a first synthetic resin film or a metal foil, the adhesive comprising a polyurethane poly(meth)acrylate and a coupling agent selected from the group consisting of silane coupling agents, titanate coupling agents and aluminum coupling agents;
laminating the first synthetic resin film or metal foil to a second synthetic resin film or metal foil; and
applying ultraviolet ray or radiant ray to the resultant laminated film.

EP 0 383 015 A2

## PRODUCTION OF LAMINATED FILM

This invention relates to production of laminated films which have large adhesive strength and heat resistance immediately after the lamination has been carried out, so that the laminated films can be further processed, for instance, heat sealed or enfolded, or can be used to wrap or envelope articles immediately after the lamination has been carried out. Accordingly, such laminated films are suitable for use as wrapping or packaging film especially for food or electronic appliances or parts.

Heretofore, laminated or layered films bonded together with adhesives composed of a first synthetic resin film and a second film or a metal foil have been produced usually by a dry lamination process. That is, a two component solvent adhesive such as a polyurethane adhesive is coated on a first film and dried, and then the film is laminated to a second film or metal foil by means of nip rolls.

In such a process, the use of a solvent adhesive of small solid content is necessary to coat the adhesive evenly on the film, and hence it is also necessary to evaporate a large amount of the solvent to dry the adhesive. Further, a long period of time is needed to attain a sufficient and stable adhesion in the resulting laminated film after the lamination has been carried out. In other words, there arises a problem that the resin films or metal foils are readily separated from each other when the resultant laminated films are further processed immediately after the lamination.

However, very recently a system has been demanded increasingly which enables wrapping or packaging food or selectronic parts with laminated films which have been produced in situ along with the manufacturing of food or electronic parts, that is, a system enabling "on-line" packaging of articles. Such a system needs a rapid curable, single component adhesive which provides laminated films having a stable and strong adhesive strength immediately after the lamination.

It is, therefore, an object of the invention to provide a process of producing laminated films which have stable and strong adhesive strength and heat resistance immediately after the lamination has been carried out, so that the resultant laminated films can be further processed, for instance, heat sealed or enfolded, or can be used to on-line wrap such articles as food or electronic parts immediately after the lamination.

In accordance with the invention, there is provided a process of producing laminated films, which comprises:
coating a photocurable adhesive on a first synthetic resin film or a metal foil, the adhesive comprising a polyurethane poly(meth)acrylate and a coupling agent selected from the group consisting of silane coupling agents, titanate coupling agents and aluminum coupling agents;
laminating the first synthetic resin film or metal foil to a second synthetic resin film or metal foil; and
applying ultraviolet ray or radiant ray to the resultant laminated film.

The term film" herein often includes metal foils as well as synthetic resin films, and the term "laminated film" therefore includes not only a laminate of a resin film to a resin film, but also a resin film to a metal foil and a matal foil to a metal foil.

The term "(meth)acrylate" includes either acrylate or methacrylate, and the term "(meth)acryloyl" includes either acryloyl or methacryloyl. Thus, the term "polyurethane poly(meth)acrylate" designates polyurethane polyacrylate, polyurethane polymethacrylate or mixtures of these.

Further, the adhesive used in the invention may be cured by application thereto of radiant ray such as elecron ray, as well as ultraviolet ray, and such adhesives will be also referred to as photocurable adhesives herein.

The photocurable adhesive used in the invention will be first described.

There may be preferably used as the polyurethane poly(meth)acrylate, for example, reaction products of diisocyanate compounds, or their dimers or trimers, with vinyl monomers having both hydroxyl groups and vinyl groups, preferably (meth)acryloyl groups therein. Adducts of compounds having active hydrogens therein to the diisocyanates or prepolymers produced by the reaction of the diisocyanate compounds, or their dimers or trimers with such compounds having active hydrogens may also be used in place thereof.

The diisocyanate compounds used include aromatic, aliphatic, alicyclic and aromatic-aliphatic diisocyanates, such as tolylenediisocyanate, diphenylmethanediisocyanate, 3,3′-dimethyldiphenylmethane-4,4′-diisocyanate, naphthylene-1,5-diisocyanate, phenylenediisocyanate, xylylenediisocyanate, 1,6-hexamethylenediisocyanate, 1,4-tetramethylenediisocyanate, isophorone diisocyanate, hydrogenated tolylenediisocyanate, hydrogenated diphenylmethane diisocyanate and hydrogenated xylylenediisocyanate.

A variety of compounds having active hydrogens therein are usable for the production of the adducts or prepolymer, and the compounds include polyols such as ethylene glycol, propylene glycol, diethylene glycol, dipropylene glycol, triethylene glycol, tetramethylene glycol, neopentyl glycol, butanediol, 1,6-hexanediol, polyoxyethylene glycol, polyoxypropylene glycol, polyoxyethylene polyoxypropylene glycol,

polytetramethylene ether glycol, polyoxypropylene triol, polyoxyethylene/oxypropylene triol, trimethylolpropane, glycerine, pentaerythritol, castor oil, bisphenol A-ethylene oxide adducts and bisphenol A-propylene oxide adducts.

Polyester polyols may also be used as the compounds having active hydrogens therein. The polyester polyols may be produced by the conventional reactions of a polybasic carboxylic acid (anhydride) with a polyhydric alcohol. The polybasic carboxylic acids (anhydrides) usable include, for example, maleic acid (anhydride), succinic acid (anhydride), adipic acid, fumaric acid, phthalic acid (anhydride), terephthalic acid, isophthalic acid, methyltetrahydrophthalic acid (anhydride), tetrahydrophthalic acid (anhydride), sebacic acid, dodecanedioic acid, azelaic acid, glutaric acid, trimellitic acid (anhydride), hexahydrophthalic acid (anhydride) and dimer acids. The polyhydric alcohol usable includes, for example, aliphatic glycols such as ethylene glycol, propylene glycol, butylene glycol, hexylene glycol, decanediol or neopentyl glycol; aliphatic polyether glycols such as diethylene glycol or dipropylene glycol; and others such as glycerine, trimethylolpropane, 1,4-cyclohexanedimethanol, neopentyl glycol ester of hydroxypivalic acid, 1,4-cyclohexanediol or hydrogenated bisphenol A.

There may be used as the beforesaid vinyl monomer which has both hydroxyl groups and vinyl groups, preferably (meth)acryloyl groups therein, for instance, N-methylol (meth)acrylamide, hydroxyalkyl (meth)-acrylates such as hydroxyethyl (meth)acrylate or hydroxypropyl (meth)acrylate, pentaerythritol mono(meth)-acrylate, allyl alcohol, mono(meth)acrylate esters of polyethylene glycol, monovinyl ethers of ethylene glycol or polyethylene glycol, monovinyl ethers of propylene glycol or polypropylene glycol, or Placcel FA-1 (Daicel Kagaku Kogyo K.K.) represented by the formula of
$CH_2 = CHCOOCH_2CH_2OCO(CH_2)_5OH$.

The polyurethane poly(meth)acrylate used in the invention may be produced by the reaction of the diisocyanate compound with the vinyl monomer usually in an equivalent ratio of the isocyanate groups of the diisocyanate compound to the hydroxyl groups in the vinyl monomer.

As a further example of the polyurethane poly(meth)acrylates used in the invention is mentioned a compound having the general formula of

$$(CH_2=\overset{R^1}{\overset{|}{C}}-COO)_{n_1}-R^2-(OH)_{n_2}$$

wherein $R^1$ represents hydrogen or methyl, $R^2$ represents a component mainly composed of an urethane component, and $n_1$ and $n_2$ are independently 1, 2 or 3.

In this regard, there may be used tipically and preferably such a polyurethane poly(meth)acrylate as produced by the reaction of at least one member selected from the group consisting of an alkylene glycol, a polyoxyalkylene glycol and a polyol with a diisocyanate compound, preferably a monomeric diisocyanate compound, and then by the reaction of the resultant product with a hydroxyalkyl (meth)acrylate.

There may also be used tipically and preferably such a polyurethane polyester poly(meth)acrylate as produced by the reaction of at least one member selected from the group consiting of a polyester polyol, an alkylene glycol and a polyol with a diisocyanate compound and then by the reaction of the resultant product with a hydroxyalkyl (meth)acrylate.

In the production of the above mentioned polyurethane poly(meth)acrylates, there may be preferably used, for example, ethylene glycol, propylene glycol, 1,3-butanediol or neopentyl glycol as the alkylene glycol, and, for example, diethylene glycol, dipropylene glycol, triethylene glycol, tripropylene glycol, polyoxyethylene glycol, polyoxypropylene glycol or polyoxyethylene polyoxypropylene glycol as the polyoxyalkylene glycol.

As the polyol may be used one or more of the trihydric or more functional polyols among the compounds having active hydrogens therein described hereinbefore, such as trimethylolpropane. The polyester polyol usable have also been mentioned hereinbefore.

The use of a polyol such as trimethylolpropane or the like in part together with the glycols or diols as above mentioned, or in place thereof, provides a tri- or more functional polyurethane poly(meth)acrylate. The co-use of these di- and more functional polyurethane poly(meth)acrylate is also preferred in the invention.

The adhesive used in the invention contains at least one coupling agents selected from the group consisting of silane coupling agents, titanate coupling agents and aluminum coupling agents.

There may be mentioned as the silane coupling agents, for example, aminosilanes such as $\gamma$-aminopropyltriethoxysilane, $\gamma$-aminopropyltrimethoxysilane, N- $\beta$ - (aminoethyl)-$\gamma$-aminopropyltrimethox-

ysilane, N- β - (aminoethyl)-γ-aminopropylmethyldimethoxysilane or N-phenyl-γ-aminopropyltrimethoxysilane, epoxy silanes such as β - (3,4-epoxycyclohexyl)ethyltrimethoxysilane, γ-glycidoxypropyltrimethoxysilane or γ-glycidoxypropyltriethoxysilane, and vinyl silanes such as vinyltris(β -methoxyethoxy)silane, vinyltriethoxysilane, vinyltrimethoxysilane, or γ-methacryloxypropyltrimethoxysilane, among others which include hexamethyldisilazane or γ-mercaptopropyltrimethoxy silane.

There may be mentioned as the titanate coupling agents, for example, tetraalkoxytitaniums such as tetraisopropoxytitanium or tetra-n-butoxytitanium, butyltitanate dimer, tetrastearyltitanate, triethanolaminetitanate, titanium acetylacetonate, titanium ethylacetylacetonate, titanium lactate, tetraoctylene glycol titanate, tetrakis(2-ethylhexoxy)titanium, tetrastearoxytitanium, isopropyltris(isostearoyl)titanium, isopropyltridecylbenzenesulfonyltitanate, isopropyltris(dioctylpyrophoaphate)titanate, tetraisopropylbis-(dioctylphosphite)titanate, tetraoctylbis(ditridecylphosphite)titanate or tetra(2,2-diallyloxymethyl-1-butyl)bis-(dioctylpyrophosphate)ethylenetitanate. As the aluminum coupling agents may be mentioned, for example, acetalkoxyaluminum diisopropylates.

Among the above coupling agents, the aminosilanes are most preferred.

The use of the coupling agents as adhesion accelerators in the adhesive in accordance with the invention accelerates the adhesion between the films and prevents pulse failure when the films are separated rapidly, but also it improves resistance to separation of films under high temperature conditions, i.e., resistance to creep. Consequently, the resultant laminated film is prevented from lifting or separation of the films when the laminated film is heat sealed or enfolded, or is used as wrapping films immediately after the lamination.

The coupling agent is contained in the adhesive in an amount usually of about 0.05-10 parts by weight, preferably in an amount of about 0.1-5 parts by weight, in relation to 100 parts by weight of the polyurethane poly(meth)acrylate. When the amount is too small, the resultant adhesive fails to provide such desired adhesion as described above, but when the amount is too large, the resultant adhesive is unstable.

The adhesive used in the invention may contain, if desired, a second photopolymerizable compound therein other than the polyurethane poly(meth)acrylate. Such a second photopolymerizable compound usable includes, for example, vinyl monomers having photopolymerizable vinyl groups therein, poly(meth)-acrylate esters, epoxy poly(meth)acrylates, polyester poly(meth)acrylates, polybutadiene poly(meth)-acrylates, photopolymerizable vinyl oligomers and polymers.

The photopolymerizable vinyl monomers are exemplified by methyl (meth)acrylate, ethyl (meth)acrylate, n-butyl (meth)acrylate, isobutyl (meth)acrylate, 1-ethylpropyl (meth)acrylate, 1-methylpentyl (meth)acrylate, 2-methylpentyl (meth)acrylate, 3-methylpentyl (meth)acrylate, 1-ethylbutyl (meth)acrylate, 2-ethylbutyl (meth)acrylate, 2-ethylhexyl (meth)acrylate, isooctyl (meth)acrylate, 3,5,5-trimethylhexyl (meth)acrylate, decyl (meth)acrylate, dodecyl (meth)acrylate, tetrahydrofurfuryl (meth)acrylate, butoxyethyl (meth)acrylate, ethylcarbitol (meth)acrylate, methyl triglycol (meth)acrylate, phenoxyethyl (meth)acrylate, phenoxypropyl (meth)acrylate, glycerol mono (meth)acrylate, acrylic acid, methacrylic acid, maleic anhydride, fumaric acid, half ester of maleic acid, itaconic acid, N-methylol (meth)acrylamide, hydroxyethyl (meth)acrylate, hydroxypropyl (meth)acrylate, pentaerythritol mono(meth)acrylate, allyl alcohol, mono(meth)acrylate ester of polyethylene glycol, mono(meth)acrylate ester of adducts of alkylene oxides to phenols or alkylphenols.

Further examples of the photopolymerizable vinyl monomers include, for example, monovinyl ethers of ethylene glycol or polyethylene glycol, monovinyl ethers of propylene glycol or polypropylene glycol, Placcel FA-1 as decribed hereinbefore, aminoethyl (meth)acrylate, N-methylaminoethyl (meth)acrylate, N,N-dimethylaminoethyl (meth)acrylate, N-ethylaminoethyl (meth)acrylate, N,N-diethylaminoethyl (meth)acrylate, allylamine, diallylamine, glycidyl (meth)acrylate, glycidyl allyl ether, styrene, vinyl acetate, acrylonitrile, methacrylonitrile, vinyl ethers, phenoxyethyl (meth)acrylate, phenyl diethylene glycol (meth)acrylate, phenyl tetraglycol (meth)acrylate, 2-hydoxy-3-phenoxypropyl (meth)acrylate, N-vinyl pyrrolidone, an acrylate ester P-550A (by KyoeishaYushi Kogyo K.K., Japan) having the formula of

$CH_2=CHCOO(CH_2CH_2O)_{5.5}$ 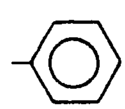 ,

The poly(meth)acrylate esters are exemplified by di-, tri- or tetraethylene glycol di(meth)acrylate, dipropylene glycol di(meth)acrylate, dipentamethylene glycol di(meth)acrylate, tetraethylene glycol di(meth)-acrylate, tetraethylene glycol dichloroacrylate, glycerol tri(meth)acrylate, diglycerol di(meth)acrylate, digricerol tetra(meth)acrylate, tetramethylene di(meth)acrylate, ethylene di(meth)acrylate, neopentyl glycol di-(meth)acrylate, trimethylolpropane tri(meth)acrylate, pentaerythritol di(meth)acrylate, pentaerythritol tri-

(meth)acrylate, 1,6-hexanediol di(meth)acrylate, and NK Ester BPE-200 (Shin-Nakamura Kagaku Kogyo K.K., Japan) represented by the formula

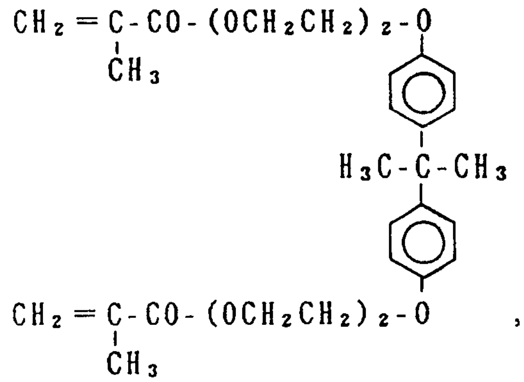

The epoxy poly(meth)acrylates usable in the invention are obtainable by, for example, reacting a compound containing epoxy groups with acrylic acid or methacrylic acid. Therefore, some examples of the epoxy poly(meth)acrylates are Epoxy Ester 40EM (Kyoeisha Yushi Kogyo K.K., Japan), an adduct of methacrylic acid to an epoxy compound, represented by the formula

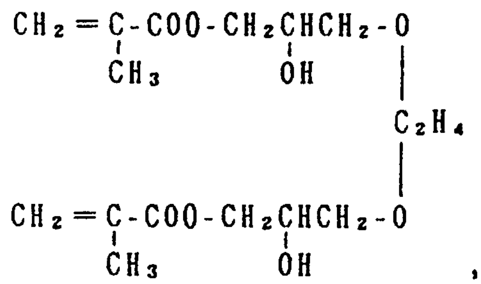

Epoxy Ester 70PA (Kyoeisha Yushi Kogyo K.K., Japan), an adduct of acrylic acid to an epoxy compound, represented by the formula

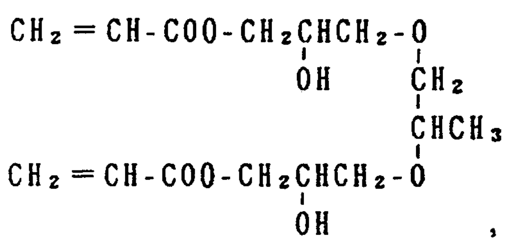

Epoxy Ester 80MFA (Kyoeisha Yushi Kogyo K.K., Japan), an adduct of acrylic acid to an epoxy compound, represented by the formula

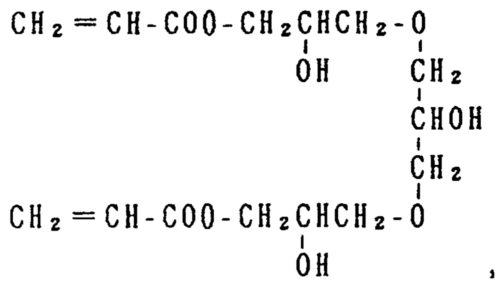

Epoxy Ester 3002M (Kyoeisha Yushi Kogyo K.K. , Japan), an adduct of methacrylic acid to an epoxy compound, represented by the formula

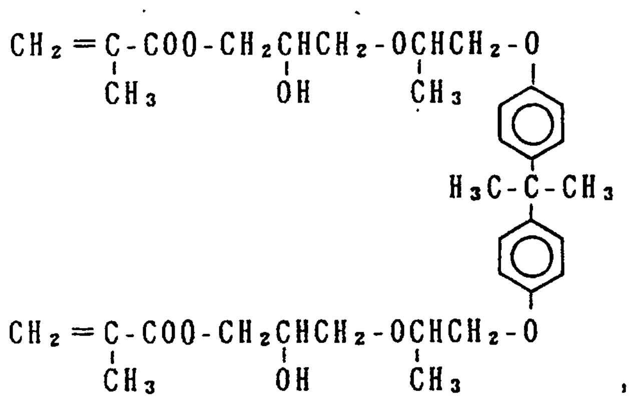

and Epoxy Ester 3002A (Kyoeisha Yushi Kogyo K.K., Japan), an adduct of acrylic acid to an epoxy compound, represented by the formula

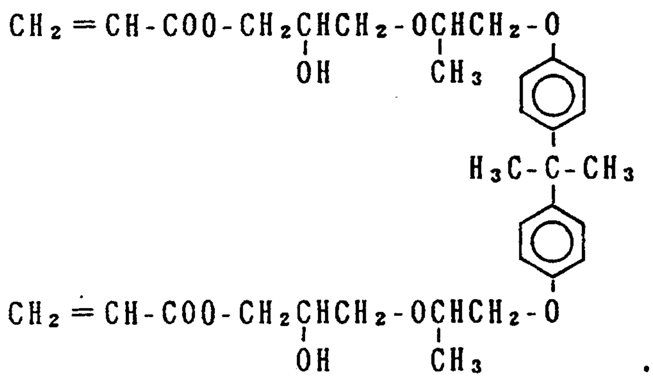

The polyester poly(meth)acrylates usable in the invention are obtainable by, for example, reacting a polyesterpolyol with acrylic acid or methacrylic acid, and are exemplified by HX-220 (Nippon Kayaku K.K., Japan) represented by the formula

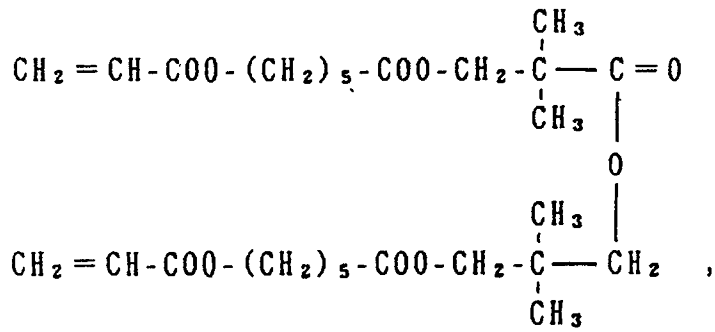

HX-620 (Nippon Kayaku K.K., Japan) represented by the formula

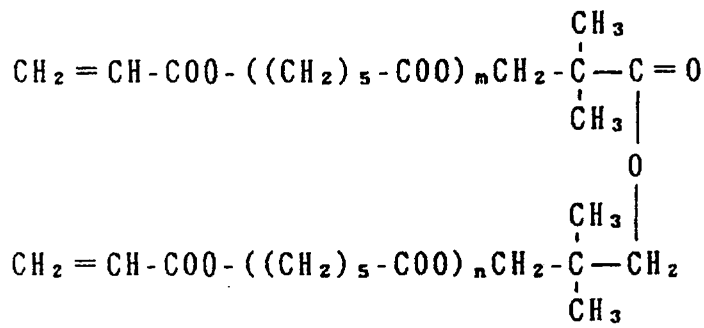

wherein m and n are independently 1,2 or 3, but m + n = 4, and Biscoat 3700 (Osaka Yuki Kagaku Kogyo K.K., Japan) represented by the formula

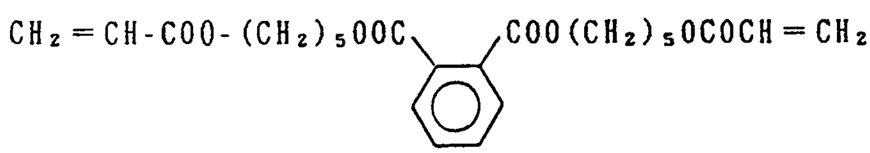

The polybutadiene poly(meth)acrylates include (meth)acrylates obtainable by the reaction of polybutadienediol with acrylic acid or methacrylic acid, and hence are exemplified by Quinbeam 101 (Nippon Zeon K.K., Japan) having a vinyl equivalent of 355 and a viscosity of 21000 cps at 25 °C.

The adhesive used in the invention polymerizes rapidly by photoirradiation. The photoirradiation herein means the irradiation of light, usually ultraviolet light of the wavelength of about 180-460 nm. The source of such ultraviolet light includes low-, medium-, high- and ultra high-pressure mercury lamps, xenon lamps, ultraviolet fluorescent lamps and carbon arc lamps. When necessary, radiations such as alpha ray, beta ray, gamma ray, X-ray or electron ray are usable.

When ultraviolet light is used to cure the adhesive, the adhesive usually contains photosensitizers, which are exemplified by benzoin compounds such as benzoin, benzoin methylether, benzoin ethylether, benzoin isobutylether or benzoin octylether; carbonyl compounds such as benzil, diacetyl, diethoxyacetophenone, 2-hydroxy-2-methylpropiophenone, 4′-isopropyl-2-hydroxy-2-methylpropiophenone, methylanthraquinone, acetophenone, benzophenone, methyl benzoylformate, benzyl methyl ketal, 1-hydroxycyclohexyl phenyl ketone or 2-methyl-1-(4-(methylthio)phenyl)-2-morpholino)propene-1; sulfur compounds such as diphenyl disulfide or dithiocarbamate; naphthalene compounds such as α-chloromethylnaphthalene; fused aromatic hydrocarbons such as anthracene; and metal salts such as iron chloride.

These photosensitizers are used usually in an amount of about 0.01-20 parts by weight, preferably about 0.1-10 parts by weight, in relation to 100 parts by weight of the photopolymerizable compounds used including the polyurethane poly(meth)acrylate and if any the second photopolymerizable compounds. However, when ionizing electromagnetic radiations are used such as electron ray or gamma ray, the adhesive may contain no photosensitizers therein since the adhesive cures rapidly in the absence of photosensitizers by the irradiation to the adhesive.

The adhesive used in the invention may further contain therein, in addition to the foregoings, various additives which are known in the art, such as fillers, softeners, antioxidants, stabilizers, tackifiers, leveling agents, antifoaming agents, organic solvents or plasticizers.

There may be used, as the tackifiers, for instance, rosins such as rosin acid, polymerized rosin, rosin acid ester, modified rosin, modified rosin ester, hydrogenated rosin, hydrogenated polymerized rosin or hydrogenated rosin acid, or resins such as terpene resin, terpene phenol resin, aromatic hydrocarbon resin, aliphatic hydrocarbon resin or petroleum resin.

The photopolymerizable adhesive used in the invention contains the polyurethane poly(meth)acrylate and the coupling agent together with additives if desired, dissolved in organic solvents or mixtures of water and organic solvents, and has a feature that it can be coated evenly either when it has the same solid content as the conventional low soild content adhesives or when it has solid content of as high as 100-40 % by weight.

The solvent preferably used includes, for example, lower aliphatic alcohols such as methanol or isopropanol, lower alkyl esters of aliphatic lower carboxylic acids such as ethyl acetate, dialkyl ketones such as acetone or methyl ethyl ketone, or aromatic hydrocarbons such as benzene, toluene or xylene. When aqueous organic solvents are used, the alcohols or ketones as mentioned above are preferably used. Most preferably, isopropanol or mixtures of water and isopropanol are used as the solvent.

According to the process of the invention, the photocurable adhesive is at first full coated on a first film, and if necessary, the solvent contained therein is evaporated, and then a second film is laminated or bonded to the first film by means of nip rolls. Then, ultraviolet ray or radiant ray is applied to the films usually over a period ranging from about 0.02 seconds to 60 seconds, thereby to photocure the adhesive, to provide laminated films which have high adhesive strength between the first and second films and high heat resistance immediately after the lamination.

In the production of the laminated film as above described, when at least one of the films used allows the permeation of ultraviolet ray therethrough, for example, when a transparent resin film is used, ultraviolet ray is applied to the transparent film. However, when either films have full printings thereon or are metal foils which prevents the permeation of ultraviolet ray, then radiant ray such as electron ray is applied to the films after the lamination. The radiant ray permeates either opaque films or metal foils so that it may be applied to either sides of the laminated films.

Usually in the process of the invention, the first and second films are fed continuously in line while the first film is coated with the adhesive and laminated to the second film, and then the resultant laminated film is irradiated, so that the irradiation amount is controllable by selecting the speed at which the films are carried and the time for which the radiant ray is applied thereto. The speed may range usually from 3-500 m/minute.

In the invention, the film includes synthetic resin films and metal foils, as before set forth, and the film used, althogh not limited, is usually not more than about 1 mm in thickness. When ultraviolet ray is used to the photocurable adhesive, a transparent resin film is used as at least one component of the laminated film.

The resin film may be composed of, for example, polyvinyl chloride resin, polyvinylidene chloride, polyethylene, polypropylene, polystyrene, ABS resin, polyamide, polyester, polyurethane, polyvinyl alcohol, ethylene-vinyl acetate copolymer or chlorinated polypropylene. The film may be colorless and transparent, or may carry thereon printed letters or patterns. There may be preferably used aluminum foil as a metal foil.

The adhesive is coated on a film usually in an amount of about 0.1-500 $g/m^2$, preferably in an amount of about 1-20 $g/m^2$. Any coating means may be adopted to apply the adhesive to a film, for example, a gravure coater, reverse coater, spray coater, knife belt coater, floating knife, knife-over-roll, knife-on-blanket, dip coater, kiss roll coater, squeeze coater, air blade coater or curtain flow coater.

In accordance with the process of the invention, the adhesive used cures rapidly by being irradiated to provide laminated films which have substantially full adhesive strength, so that the laminate can stand further processing such as on-line cutting immediately after the lamination, as well as heat sealing or enfolding to, for example, pouches or envelopes. Thus, the laminated film is not specifically limited in use, but it is especially suitable for use as on- line wrapping or packaging films for food or electronic parts, especially for the latter, where high and stable adhesive strength is needed immediately after the lamination.

Further, the adhesive used in the invention is a single component adhesive which has a high solid content, so that the amount of the solvent evaporated when the adhesive is dried is small and there arises substantially no problem of environmental pollution. The use of isopropanol or aqueous isopropanol as a solvent of the adhesive further reduces the possibility of environmental pollution.

The invention will now be described with reference to the following examples, which however are intended to illustrate the invention only and are not to be construed as limiting the scope of the invention. In

the examples, weights and percentages are by weight.

## EXAMPLES

### Preparation of Polyurethane Di- and Triacrylate

#### Preparation of Liquid A

An amount of 2745 parts of polyoxypropylene glycol having an average molecular weight of 1000, 1106 parts of dipropylene glycol and 2666 parts of isophorone diisocyanate were reacted in 1687 pats of ethyl acetate, and then 232 parts of hydroxyethyl acrylate were added to the resulting reaction mixture so that the remaining diisocyanate was reacted therewith to provide a polyurethane diacrylate. Finally, an amount of 2813 parts of isopropyl alcohol was added to provide a liquid A.

#### Preparation of Liquid B

Meanwhile, 20000 parts of polyoxypropylene glycol having an average molecular weight of 1000, 134 parts of trimethylolpropane and 4850 parts of hydrogenated xylylenediisocyanate were reacted in 6449 pats of ethyl acetate, and then 812 parts of hydroxyethyl acrylate were added to the resulting reaction mixture so that the remaining diisocyanate was reacted therewith to provide a polyurethane triacrylate. Finally, 10800 parts of isopropyl alcohol were added to provide a liquid B.

#### Preparation of Liquid C

Similarly to the above, an amount of 3542 parts of polyoxyethylene polyoxypropylene glycol having an average molecular weight of 2200 and an oxyethylene content of about 75 %, 1408 parts of triethylene glycol and 2666 parts of isophorone diisocyanate were reacted in 1963 pats of methyl ethyl ketone, and then 236 parts of hydroxyethyl acrylate were added to the resulting reaction mixture so that the remaining diisocyanate was reacted therewith to provide a polyurethane diacrylate. Finally, an amount of 3280 parts of isopropyl alcohol was added to provide a liquid C.

#### Preparation of Liquid D

An amount of 331 parts of isophthalic acid, 402 parts of sebacic acid, 376 parts of neopentyl glycol and 73 parts of ethylene glycol were reacted together to provide a polyester polyol having a hydroxyl value of 1250.

An amount of 318 parts of the polyester polyol, 4 parts of 1,3-butanediol and 40 parts of xylylene diisocyanate were reacted in 140 pats of ethyl acetate, and then 10 parts of hydroxyethyl acrylate were added to the resulting reaction mixture so that the remaining diisocyanate was reacted therewith to provide a polyester polyurethane diacrylate, as a liquid D.

#### Preparation of Liquid E

An amount of 318 parts of the above polyester polyol, 4 parts of 1,3-butanediol and 40 parts of xylylene diisocyanate were reacted together in 170 pats of ethyl acetate. Then, to the resultant reaction mixture,

there were added 30 parts of an isocyanate compound prepared by the addition of three moles of tolylene diisocyanate to one mole of trimethylolpropane and then 26 parts of hydroxyethyl acrylate to react with the isocyanate compound, thereby to provide a polyester polyurethane di-and triacrylate, as a liquid E.

Preparation of Adhesives

The polyurethane polyacrylates prepared as above, a coupling agent, a photosensitizer (not used when electron ray was irradiated) and a solvent were admixed together in amounts (parts) as shown in the Tables 1 and 2, to provide adhesives A to I.

Production of Laminated Films

The adhesive was coated on a first film and the solvent was evaporated there from. Then, a second film was laminated to the first film, and ultraviolet ray (with a high pressure mercury lamp) or electron ray was applied thereto.

The resultant laminated films were subjected to measurement of T-type separation adhesive strength (temperature: 23°C, relative humidity: 50 %, peeling speed: 300 mm/min.) heat seal strength and heat seal strength after boilng. The results are shown in the Table 3.

The heat seal was carried out for two seconds under the conditions 160°C and 2 $kg/cm^2$ and then T-type separation adhesive strength was determined in the same manner as above. The laminated film was heat sealed to form a pouch of 100 mm x 150 mm in inside measurement and 200 ml of water was put therein. The pouch was boiled at 90°C for 30 minutes and then T-type separation adhesive strength was determined in the same manner as above as the heat seal strength after boiling.

In the Table 3, the abbreviations stand for the followings.

PET: polyethylene terephthalate film of 12 µm thick, having a colored printing thereon.
LLDPE: low density polyethylene film of 40 µm thick, transparent.
ON: biaxially stretched polyamide film of 15 µm thick, having a colored printing thereon.
OPP: biaxially stretched polypropylene film of 20 µm thick, having a colored printing thereon.
CPP: nonstretched polypropylene film of 30 µm thick, transparent.

TABLE 1

| | Adhesives | | | | |
|---|---|---|---|---|---|
| | A | B | C | D | E |
| Liquid A | 70 | 70 | 70 | — | — |
| Liquid B | 30 | 30 | 30 | — | — |
| Liquid C | — | — | — | 100 | 100 |
| Isopropyl alcohol | 25 | 25 | 25 | 10 | 10 |
| Water | — | — | — | 35 | 35 |
| γ-aminopropoyltriethoxysilane | 0.6 | — | 0.6 | 0.6 | 0.6 |
| Tetraisopropxytitanium | — | 0.6 | — | — | — |
| 2,2-Dimethoxy-2-phenylacetophenone | 0.6 | 0.6 | — | 0.6 | — |
| 1-Hydroxycyclohexyl phenyl ketone | 0.6 | 0.6 | — | — | — |
| 2-Hydroxy-2-methylpropiophenone | — | — | — | 0.6 | — |
| Solid content (%) | 49 | 49 | 48 | 42 | 42 |

TABLE 2

| | Adhesives | | | |
|---|---|---|---|---|
| | F | G | H | I |
| Liquid D | 100 | 100 | — | — |
| Liquid E | — | — | 100 | 100 |
| Ethyl acetate | 61 | 61 | 65 | 65 |
| γ -aminopropoyltriethoxysilane | 0.7 | 0.7 | 0.7 | 0.7 |
| Tetraisopropxytitanium | — | — | — | — |
| 2,2-Dimethoxy-2-phenylacetophenone | — | — | — | — |
| 1-Hydroxycyclohexyl phenyl ketone | 0.4 | — | — | — |
| 2-Hydroxy-2-methylpropiophenone | — | — | 0.4 | — |
| Solid content (%) | 45 | 45 | 43 | 43 |

TABLE 3

| | Examples | | |
|---|---|---|---|
| | 1 | 2 | 3 |
| Production of Laminated Film | | | |
| Adhesive used | A | A | A |
| Construction of Laminate | PET/LLDPE | ON/LLDPE | OPP/CPP |
| Adhesive coated surface | PET | ON | OPP |
| Amount of adhesive coated (Solid, $g/m^2$) | 3.0 | 3.0 | 3.0 |
| Line speed (m/min.) | 100 | 100 | 100 |
| Radiant ray *) | UV | UV | UV |
| Irradiated surface | LLDPE | LLDPE | CPP |
| UV Irradiation (W/cm x lamp) | 160 x 3 | 160 x 3 | 160 x 3 |
| Electron beam irradiation (Mrad) | — | — | — |
| Properties of Laminated Film | | | |
| Appearance | Excellent | Excellent | Excellent |
| T-type separation adhesive strength (g/15 mm breadth) | 340 | 580 | 100 |
| Heat seal strength (g/15 mm breadth) | 4.2 | 4.5 | 1.8 |
| Heat seal strength after boiling (g/15 mm breadth) | 3.6 | 4.2 | 1.3 |

Notes: *) UV: Ultraviolet ray; EB: Electron ray

TABLE 3 (Continued)

| | Examples | | |
|---|---|---|---|
| | 4 | 5 | 6 |
| **Production of Laminated Film** | | | |
| Adhesive used | B | D | C |
| Construction of Laminate | ON/LLDPE | ON/LLDPE | PET/LLDPE |
| Adhesive coated surface | ON | ON | PET |
| Amount of adhesive coated (Solid, $g/m^2$) | 3.0 | 3.0 | 3.0 |
| Line speed (m/min.) | 100 | 100 | 60 |
| Radiant ray | UV | UV | EB |
| Irradiated surface | LLDPE | LLDPE | PET |
| UV Irradiation (W/cm x lamp) | 160 x 3 | 160 x 3 | — |
| Electron beam irradiation (Mrad) | — | — | 3 |
| **Properties of Laminated Film** | | | |
| Appearance | Excellent | Excellent | Excellent |
| T-type separation adhesive strength (g/15 mm breadth) | 520 | 500 | 280 |
| Heat seal strength (g/15 mm breadth) | 4.3 | 4.1 | 3.0 |
| Heat seal strength after boiling (g/15 mm breadth) | 4.0 | 3.5 | 3.0 |

TABLE 3 (Continued)

| | Examples | | |
|---|---|---|---|
| | 7 | 8 | 9 |
| Production of Laminated Film | | | |
| Adhesive used | C | C | E |
| Construction of Laminate | ON/LLDPE | OPP/CPP | ON/LLDPE |
| Adhesive coated surface | ON | OPP | ON |
| Amount of adhesive coated (Solid, $g/m^2$) | 3.0 | 3.0 | 3.0 |
| Line speed (m/min.) | 60 | 60 | 60 |
| Radiant ray | EB | EB | EB |
| Irradiated surface | ON | OPP | ON |
| UV Irradiation (W/cm x lamp) | — | — | — |
| Electron beam irradiation (Mrad) | 3 | 3 | 3 |
| Properties of Laminated Film | | | |
| Appearance | Excellent | Excellent | Excellent |
| T-type separation adhesive strength (g/15 mm breadth) | 410 | 80 | 390 |
| Heat seal strength (g/15 mm breadth) | 3.3 | 1.7 | 3.1 |
| Heat seal strength after boiling (g/15 mm breadth) | 3.1 | 1.2 | 2.8 |

TABLE 3 (Continued)

| | Examples | | |
|---|---|---|---|
| | 10 | 11 | 12 |
| Production of Laminated Film | | | |
| Adhesive used | F | H | G |
| Construction of Laminate | ON/LLDPE | ON/LLDPE | ON/LLDPE |
| Adhesive coated surface | ON | ON | ON |
| Amount of adhesive coated (Solid, $g/m^2$) | 3.0 | 3.0 | 3.0 |
| Line speed (m/min.) | 100 | 100 | 60 |
| Radiant ray | UV | UV | EB |
| Irradiated surface | LLDPE | LLDPE | LLDPE |
| UV Irradiation (W/cm x lamp) | 160 x 3 | 160 x 3 | – |
| Electron beam irradiation (Mrad) | – | – | 3 |
| Properties of Laminated Film | | | |
| Appearance | Excellent | Excellent | Excellent |
| T-type separation adhesive strength (g/15 mm breadth) | 570 | 580 | 550 |
| Heat seal strength (g/15 mm breadth) | 6.3 | 6.4 | 6.3 |
| Heat seal strength after boiling (g/15 mm breadth) | 3.6 | 4.3 | 3.7 |

TABLE 3 (Continued)

| | Examples 13 |
|---|---|
| **Production of Laminated Film** | |
| Adhesive used | I |
| Construction of Laminate | ON/LLDPE |
| Adhesive coated surface | ON |
| Amount of adhesive coated (Solid, $g/m^2$) | 3.0 |
| Line speed (m/min.) | 60 |
| Radiant ray | EB |
| Irradiated surface | LLDPE |
| UV Irradiation (W/cm x lamp) | — |
| Electron beam irradiation (Mrad) | 3 |
| **Properties of Laminated Film** | |
| Appearance | Excellent |
| T-type separation adhesive strength (g/15 mm breadth) | 570 |
| Heat seal strength (g/15 mm breadth) | 6.2 |
| Heat seal strength after boiling (g/15 mm breadth) | 3.8 |

## Claims

1. A process of producing a laminated film, which comprises:
coating a photocurable adhesive on a first synthetic resin film or a metal foil, the adhesive comprising a polyurethane poly(meth)acrylate and a coupling agent selected from the group consisting of silane coupling agents, titanate coupling agents and aluminum coupling agents;
laminating the first synthetic resin film or metal foil to a second synthetic resin film or metal foil; and applying ultraviolet ray or radiant ray to the resultant laminated film.

2. The process as claimed in claim 1 wherein the adhesive contains the coupling agent in an amount of 0.05-10 parts by weight in relation to 100 parts by weigt of the polyurethane poly(meth)acrylate.

3. The process as claimed in claim 1 wherein the coupling agent is a silane coupling agent.

4. The process as claimed in claim 3 wherein the silane coupling agent is an aminosilane.

5. The process as claimed in claim 4 wherein the aminosi lane is $\gamma$-aminopropyltriethoxysilane.

6. The process as claimed in claim 1 wherein the coupling agent is a titanate coupling agent.

7. The process as claimed in claim 6 wherein the titanate coupling agent is a tetraalkoxytitanium.

8. The process as claimed in claim 7 wherein the tetraalkoxytitanium is tetraisopropxytitanium.

9. The process as claimed in claim 1 wherein the adhesive further contains a second photopolymerizable compound other than the polyurethane poly(meth)acrylate.

10. The process as claimed in claim 1 wherein the adhesive further contains a photosensitizer in an amount of 0.01-20 parts by weight of 100 parts by weigt of the polyurethane poly(meth)acrylate.

11. The process as claimed in claim 1 wherein the polyurethane poly(meth)acrylate is produced by the reaction of at least one member selected from the group consiting of an alkylene glycol, a polyoxyalkylene glycol or a polyol with a diisocyanate compound and then by the reaction of the resultant product with a hydroxyalkyl (meth)acrylate.

12. The process as claimed in claim 1 wherein the polyurethane poly(meth)acrylate is produced by the reaction of at least one member selected from the group consiting of a polyester polyol, an alkylene glycol and a polyol with a diisocyanate compound and then by the reaction of the resultant product with a hydroxyalkyl (meth)acrylate.

13. The process as claimed in claim 1 wherein the first synthetic resin film or metal foil and the second synthetic resin film or metal foil are fed continuously while the adhesive is coated on the first synthetic resin film or metal foil, and then the first synthetic resin film or metal foil is laminated to the second synthetic resin film or metal foil and ultraviolet ray or radiation ray is applied to the resultant laminated film.

14. The process as claimed in claim 13 wherein the first synthetic resin film or metal foil and the second synthetic resin film or metal foil are fed at a speed of 3-500 m per minute.

15. The process as claimed in claim 13 wherein the adhesive is coated on the first synthetic resin film or metal foil in an amount of 0.1-500 $g/m^2$.

16. The process as claimed in claim 13 wherein ultraaviolet ray or radiation ray is applied to the resultant laminated film over a period ranging from about 0.02 seconds to 60 seconds.

17. The process as claimed in claim 13 wherein the first synthetic resin film or metal foil and the second synthetic resin film or metal foil are not more than 1 mm in thickness.